# EUROPEAN PATENT APPLICATION

(11) **EP 2 143 874 A1**
(43) Date of publication of application: **13.01.2010**
(21) Application number: 08012547.9
(22) Date of filing: 11.07.2008
(51) Int. Cl.: E21B 33/13

(54) **Sealing arrangement and sealing method**

(71) Applicant: Welltec A/S, 3450 Allerød (DK)
(72) Inventor: Hallundbaek, Jorgen, 3230 Graested (DK)
(74) Representative: Hoffmann Dragsted

(57) **Abstract**

The invention relates to a sealing arrangement (100) for sealing a leak (21) in a casing (2) or for sealing off a production zone (1) where the casing having a circumference and perforations (3) is situated in a borehole (22) downhole, but with a distance to an inner wall of the borehole, creating an intervening space (4) there between. The sealing arrangement comprises a composition (5) for injection into the intervening space or into a leak in the casing, and a network (30) comprised in the composition after injection .

## Description

### Technical Field

The present invention relates to a sealing arrangement for sealing a leak in a casing or for sealing off a production zone where the casing having a circumference and perforations is situated in a borehole downhole, but with a distance to an inner wall of the borehole, creating an intervening space there between. Furthermore, the invention relates to a sealing method.

### Background

Casings are placed in boreholes in the formation mainly for preventing a collapse of the boreholes. The borehole may have a number of casings situated within another so that a production casing is partly situated within an intermediate casing which again is situated within a surface casing and a conductor pipe. The conductor pipe is cemented to the formation, and the surface casing and the intermediate casing are cemented within the conductor pipe.

In some cases, the production casing is fixed within the intermediate casing by means of packers leaving an open space between the production casing and the intermediate casing. When producing oil, as a safety precaution, the internal pressure in the open space and the production casing, respectively, must not differ to much from each other If the pressure difference is too high, it may be necessary to minimise the space by inserting a packer closer to the surface. Inserting a packer at this stage can, however, be a difficult operation.

After the production casing has been placed in the borehole, it is subsequently perforated in a certain zone where oil is present, a so-called production zone. Then, the oil fluid is able to enter into the production casing and oil production is initiated. During the oil production phase, the oil fluid may be emulsified with water as the zone with oil may shift when emptying the oil reservoir for oil.

In the event that the zone with oil has shifted, it is necessary to make new perforations in the production casing and to seal off the previous perforations. In order to seal off the previous perforations, a new production casing is inserted within the previous production casing and packers are placed on both sides of the zone. Subsequently, new perforations are made in the new production casing.

By inserting a new production casing into the previous production casing, the production rate is substantially diminished due to the increase in friction and the velocity is likewise decreased causing a variety of related problems.

Another way to seal off the zone with water is to insert a cement plug above the zone for plugging the underlying casing. Subsequently, the production casing is perforated in a new area above the cement plug where oil is present. Hereby, the underlying casing is shut off more permanently and it is very difficult, if not impossible, to resume the production in the production casing beneath the plug without having to insert a new production casing.

In another situation, the production casing has a leak which needs to be sealed. A known solution is to expand a liner from within the production casing resulting in a somewhat uneven surface inside the casing, influencing the flow of the oil.

### Description of the Invention

An aspect of the present invention is, at least partly, to overcome the disadvantages of the known solution to sealing off a leak or production zone or minimising the open space between the production casing and the intermediate casing.

As will become evident from the description below, an improved solution is thus suggested, which may be obtained by a sealing arrangement for sealing a leak in a casing or for sealing off a production zone where the casing having a circumference and perforations is situated in a borehole downhole, but with a distance to an inner wall of the borehole, creating an intervening space there between, comprising:
- a composition for injection into the intervening space or into a leak in the casing, and
- a network comprised in the composition after injection.

In one embodiment, the composition comprises a compound.

In another embodiment, the network can be made of interlacing lines, such as a woven wire, wire netting, a web, a grid, a lattice, a grating, or the like networks ejected prior to or simultaneously with the composition.

Moreover, the network may be made of elements in the composition pasting together during hardening of the injected composition and thereby forming a network within the composition.

Additionally, the composition may comprise a plurality of separate units each having a core enclosed within a compound.

In one embodiment, the network may be made from the separate units pasting together during hardening of the compound and thereby forming the network.

Furthermore, each separate unit may have an intermediate substance between the core and the surrounding compound.

In addition, the elements, the core, or the intermediate substance in the composition can be made from ceramics, metal, polymer, glass fibre, cellulose, or pulpwood.

Alternatively, the network can be made of wire, core, coiled wire, polymer thread, glass fibre thread, or a like elongated component.

The compound may comprise cement, metal, polymer, synthetic rubber, natural rubber, or silicone. In one embodiment, the compound may further comprise a curing agent, blinding agent, hardener, accelerator, or accelerator.
In one embodiment, the core of each separate unit may be made of a magnetic material making the separate units paste together.

The invention also relates to a sealing method for sealing a leak or a production zone or for minimising an open.space above a packer between a production casing and an intermediate casing, comprising the steps of:
- injecting a compound,
- forming of a network in the compound in order to fixate the injected compound in a predetermined position.

In one embodiment, the network may be discharged prior to or simultaneously to the injecting step and take form within the compound when the compound is injected to at least partly surround the network.

In another embodiment, the network can be formed from elements pasting together within the compound during hardening or stiffening of the compound.

### Brief Description of the Drawings

The invention is explained in detail below with reference to the drawings, in which
Fig. 1 shows a sectional view into the borehole with a production casing, intermediate casings, surface casing, and conductor pipe,
Fig. 2 shows a sectional view into a borehole where a casing having a leak is situated within the borehole,
Fig. 3 shows a partially sectional view of a perforated casing where each perforation has been sealed with a sealing arrangement,
Fig. 4 shows a sectional view of a blocked casing,
Fig. 5 shows a sectional view of the casing of Fig. 2 with a sealing arrangement comprising coiled wires for sealing the leak,
Fig. 6 shows a sectional view of the casing of Fig. 2 with an embodiment of the sealing arrangement comprising pasting beads or balls,
Fig. 7 shows a sectional view of the casing of Fig. 2 with another embodiment of the sealing arrangement comprising fibres,
Fig. 8 shows a sectional view of the casing of Fig. 2 with yet another embodiment of the sealing arrangement comprising a lattice, and
Fig. 9 shows a cross-sectional view of composition comprised of separate elements.

The drawings are merely schematic and shown for an illustrative purpose.

### Detailed description of the invention

The present invention relates to a sealing arrangement 100 comprising a composition 5 and a network 30 for fixating the composition 5 in a predetermined position while the composition 5 fastens to its surroundings. Typically, the composition 5 is injected into a well comprising a highly pressurised fluid.

The composition can be in the form of a compound or in the form of separate units.

When the composition 5 is in form of a compound, the compound is injected in its liquid phase, and while the compound hardens it needs to be held in place in a certain position, which is accomplished by the network 30.

In one embodiment, the composition 5 is melted before being injected and hardens/stiffens when injected. In another embodiment, the composition 5 consists of one base part in its liquid form, or at least in a partly liquid form, which is mixed with another part such as a hardener prior to being injected in order to make the compound harden. By a partly liquid form is meant an injectable base part which is partly liquid and partly solid.

In another embodiment, the composition 5 expands or swells while hardening. The composition 5 may be any kind of expandable or swellable composition. The composition may thus be a two-part glue where the parts when mixed expand and harden. In another embodiment, the composition 5 expands when subjected to the oil fluid containing water seeping from the formation and/or when subjected to the heat of the fluid. Additionally, the composition 5 may be of the type which does not expand, but only hardens when subjected to the oil fluid containing water or the heat of the fluid seeping from the formation. Here the oil fluid is an emulsion comprising oil and water. Thus, the composition 5 may be a two-part polyurethane glue, or another suitable polymer able to harden in one of the ways mentioned above.

Furthermore, the composition 5 may comprise a resin and a catalyst reacting under pressure whereby the composition hardens. Thus, the composition 5 reacts when exposed to a certain pressure which may be applied by the injection tool 13 just before injecting the composition. Alternatively, the reaction may come from the high pressure within the borehole 22 when the composition has been injected.

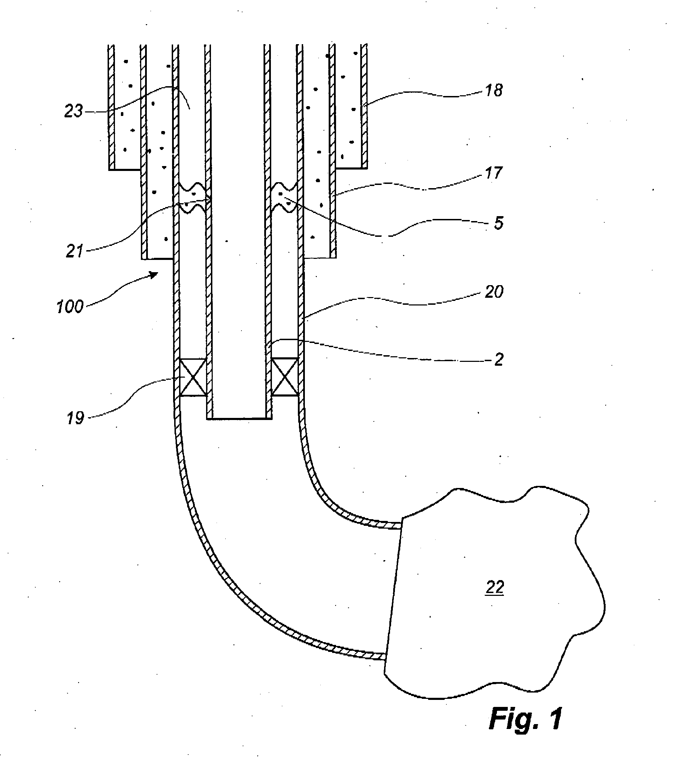

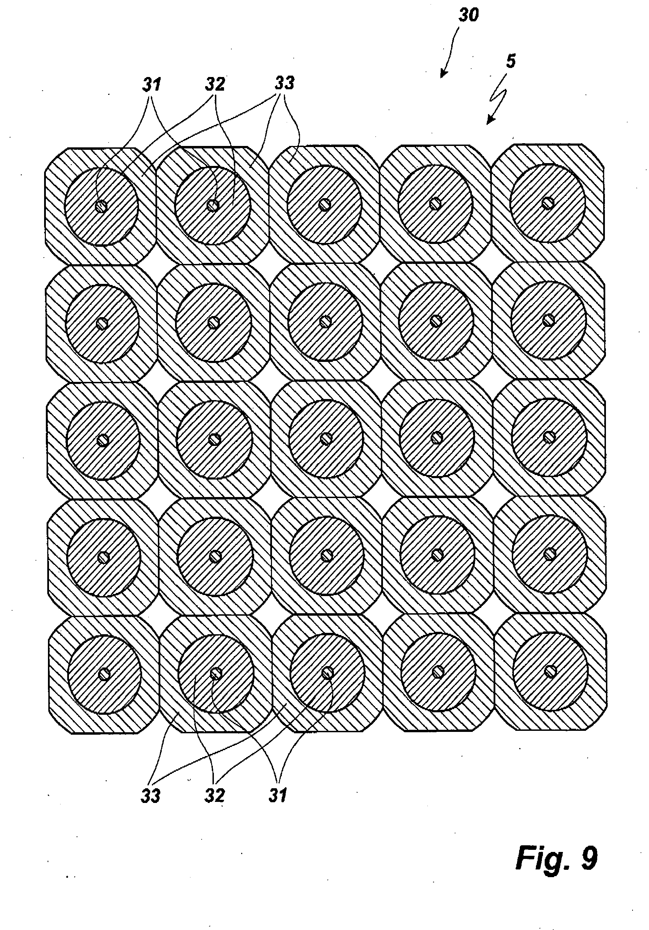

In another embodiment, the composition comprises separate units in the form of balls, beads, or the like objects. Each unit has an external layer of a compound enabling the units to paste together after injection and thereby form a network, as shown in Fig. 9. A sealing arrangement 1 according to the present invention can be used in a variety of situations. One such situation is where a production casing 2 is held in place within an intermediate casing 20 by means of a packer 19, and where the pressure in the open space 23 above the packer 19 is too different from the pressure within the production casing 2 to satisfy safety regulations. In such events, it is necessary to minimise the open space by placing an obstruction in form of a sealing arrangement 100 above the packer 19 as shown in Fig. 1.

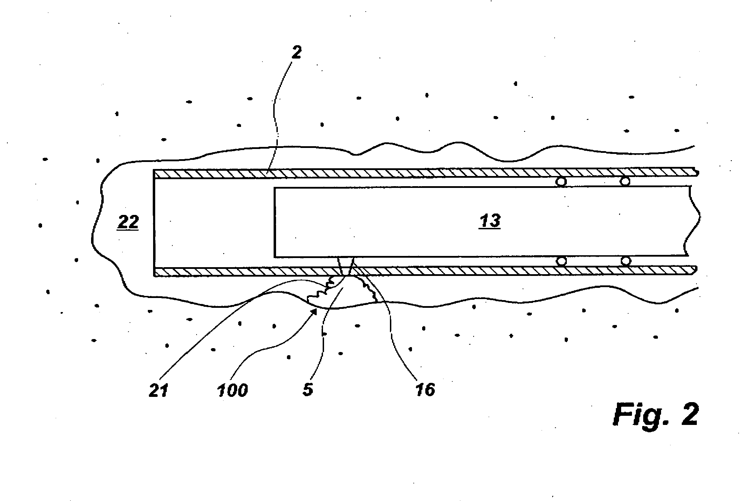

Another situation is shown in Fig. 2, in which a leak 21 has occurred in a casing 2 downhole. The casing 2 is placed in a borehole 22 and an intervening space 4 is thus created between the outside wall of the casing and the inside of the borehole. In such a situation, the sealing arrangement 100 is inserted into this cavity 24 outside the leak 21, the composition 5 being injected both into and through the leak in order to seal the leak in the casing.

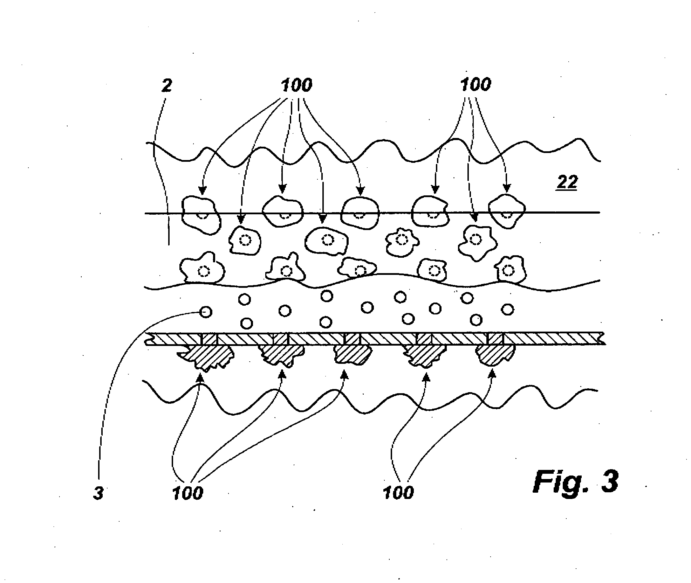

The sealing arrangement 100 can also be used in a situation where a perforated casing 2 is used in a borehole 22 and an oil production zone 1 for some reason has shifted or oil is no longer present in that zone. Perforations 3 are provided outside the production zone 1 enabling oil to flow into the casing 2 and in this way be brought up from downhole. When oil is sufficiently mixed with water or the reservoir has become emptied of oil, the perforations 3 of the casing 2 need to be sealed so that a new production zone 14? can made in another place along the casing string. Thus, the sealing arrangement 100 may be used for closing a perforated zone in a casing 2 as shown in Fig. 3. In this case, the sealing arrangement 100 is placed in the intervening space 4 between the outside of the casing 2 and the inside of the borehole 22. The sealing arrangement 100 only needs to cover the perforations as a bead is fastened inside each perforation, projecting somewhat outwards radially from the casing. Thus, the sealing arrangement 100 needs not fill the whole intervening space 4 in order to close the perforations 3.

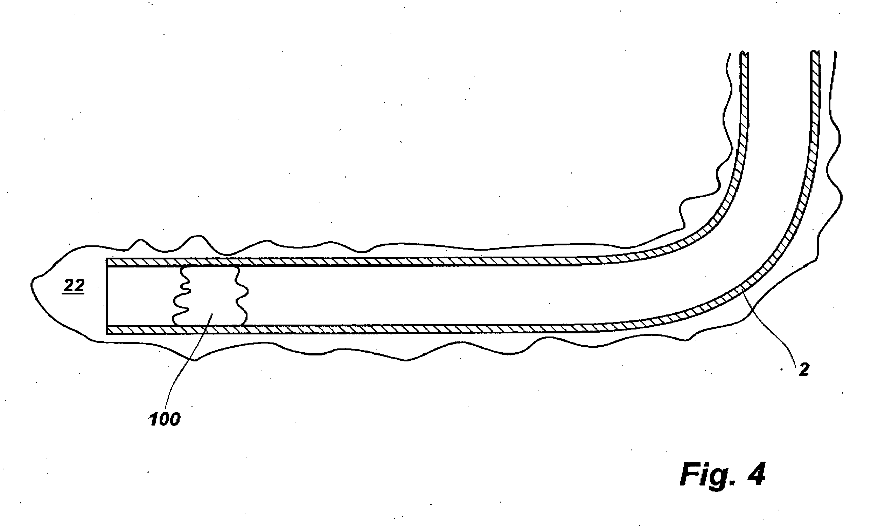

Additionally, the sealing arrangement 100 can be used to block the lowest part of the well by blocking the casing 2 from within and across its entire internal area as shown in Fig. 4. Since the sealing arrangement 100 comprises a network 30, the blocking of the casing 2 can be performed at every level of the casing and not just at the bottom by filling up the casing from the bottom.

The sealing arrangement 100 may comprise a composition 5 which is in its liquid or partially liquid phase when injected. In this embodiment, the network 30 is a plurality of interlacing lines 29 in the form of a woven wire, a wire netting, a web, a grid, a lattice 27, a grating, or the like networks. The network 30 is compressed during storage in the injection tool 13 and is discharged either before the composition 5 or simultaneously with the composition.

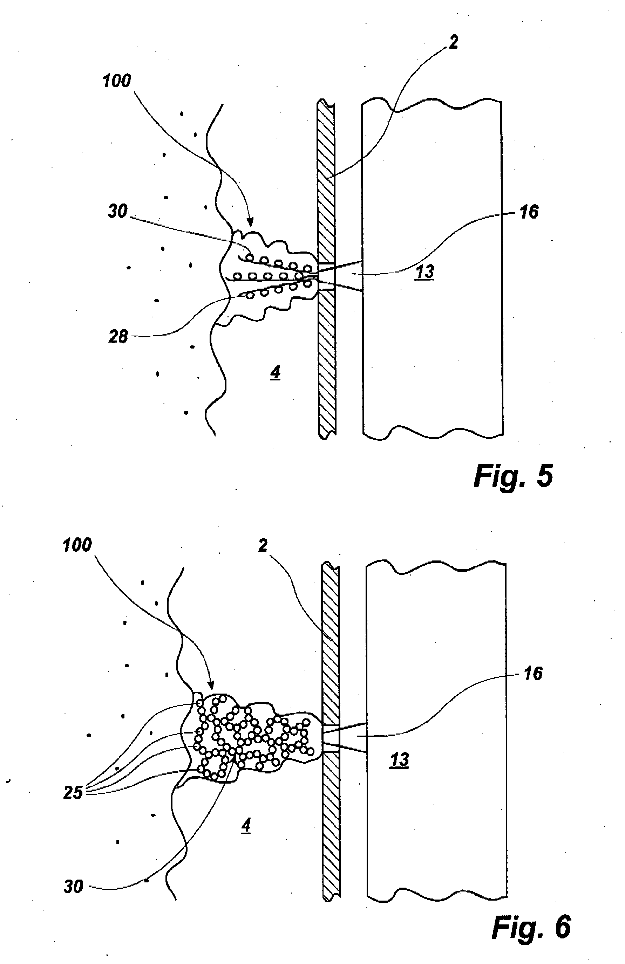

In Fig. 5, the network 30 is made of coiled metal wires 28 or threads which are compressed in the tool 13 by stacking the windings of each coiled wire 28 onto each other forming a coil or a helically spring. The network 30 can also be made of wire, core, polymer thread, glass fibre threads, or a like elongated component being tangled up into a network during injection.

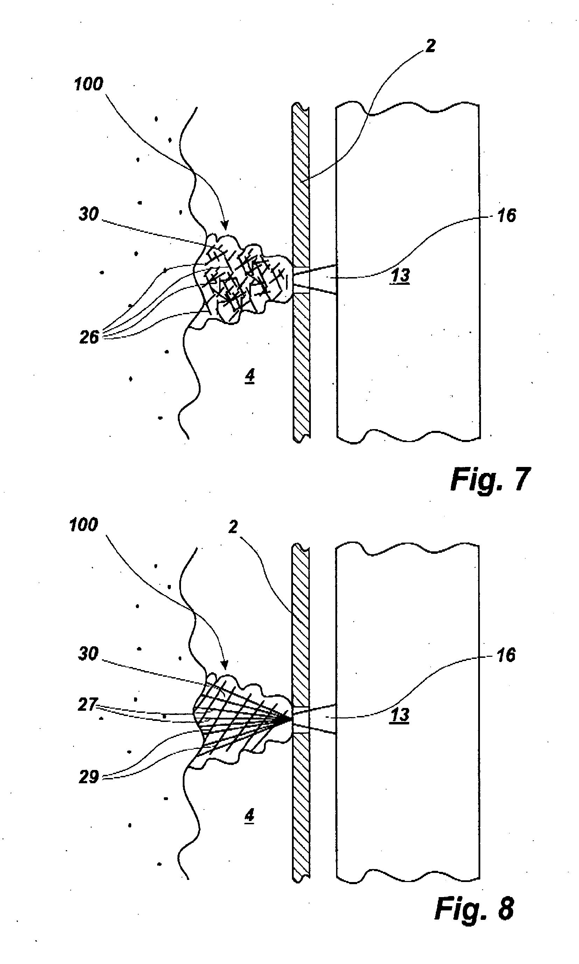

In another embodiment, the network 30 is an expandable lattice 27 as shown in Fig. 8, in which first interlacing lines 29 cross second interlacing lines 29, the interlacing lines being twisted so that each first interlacing lines abut other adjacent first interlacing lines and each second interlacing lines abut other adjacent second interlacing lines. Thus, the compressed lattice 27 has the form of an elongated member and the expanded lattice has the form of a sheet. In yet another embodiment, the network 30 is in the form of a grid made of a slit plate which, when expanded, forms a perforated plate. Such networks 30 can be discharged prior to the injection of the composition 5 in order to retain the composition and form the sealing arrangement 100.

The network 30 can also be comprised in the composition 5 and be formed during hardening of the composition. In this case, the network 30 is formed from elements pasting together during hardening of the injected composition 5. The elements may be in the form of beads or small balls 25 as shown in Fig. 6, or in the form of fibres 36 or threads as shown in Fig. 7. The elements may be made from ceramics, polymer, glass fibre, cellulose, or pulpwood.

In Figs. 2, 5, 6 and 7, the composition 5 is injected so that it hits the inside wall of the borehole 22. In order to hold the composition 5 in position outside the leak 21 in the casing 2, a network 30 is discharged together with the composition. As mentioned above, the network 30 shown in Fig. 5 can also be discharged prior to the injection of the composition 5. The network 30 helps the composition bridge he gap between the outside of the leak in the casing 2 and the inside wall of the borehole 22.

In some embodiments, the composition 5 is a compound comprising cement, polymer, synthetic rubber, natural rubber, and/or silicone. When using rubber or silicone, the compound is typically melted prior to the injection. The melting process is performed in the injection tool 13 or prior to loading the compound into the tool.

The polymer may be any suitable elastomer or a thermoplastic polymer. The elastomer may comprise nitrile rubber (NBR), hydrogenated nitrile rubber (HNBR), carboxyl nitrile rubber (XNBR), silicone rubber, ethylene-propylene-diene copolymer (EPDM), fluoroelastomer (FKM, FEPM), and perfluoroelastomer (FFKM), or other suitable polymers. Thermoplastic polymer may comprise Teflon, polyetheretherketone, polypropylene, polystyrene, and polyphenylene sulphide, or other suitable polymers.

In order to absorb water from the emulsified fluid seeping from the formation, the polymer may comprise any water-soluble polymer able to absorb water, thus enabling a hardening of the compound. Such water-soluble polymer may be methylcellulose, cellulose acetate phthalate, and hydroxypropyl methylcellulose polymers, poly (ethylene oxide) polymers, guar and its derivatives, polyacrylamide, polyvinylpyrolidone, polyacrylic acid, polyvinylpyrolidone, oligo maleinate copolymers, oligo maleinate oligomers, allyl maleate oligomers, silicon-based materials, and flouro-silicone based materials.

As mentioned, the compound can comprise a hardener or a curing agent when the compound is stored in a two-part form and mixed just before injection of the compound. In order for the elements to paste together, the compound may comprise a binding agent. The binding agent can also be added to the composition 5 in order for the compound to bind to the metal wire or other elongated components. The process of stiffening or hardening must take place immediately after the composition 5 has been injected so that the highly pressurised fluid in the well does not interfere with the forming of a sealing arrangement 100 in a predetermined position, and the compound may therefore be provided with an accelerator.

When using a network 30 of metal - such as coiled wire 28, threads, woven wire, wire netting, a web, a grid, a lattice 27, or a grating - the network can be used to provide heat to the compound thereby accelerating the hardening process. Electricity is led through the metal and transformed into heat, which again is ejected into the compound from within the compound.

As mentioned, the composition 5 may comprise a plurality of separate units each having a core enclosed by a compound. The compound may be the same as mentioned above and enable the units to paste together after being ejected into the intervening space. Thus, the network is made from the separate units pasting together during hardening of the compound and thereby forming the network.

In Fig. 9, the composition comprises a plurality of separate units. Each unit has a core 31 enclosed within an intermediate substance 32 which again is enclosed within an external layer 33 of compound. When ejecting the units into the intervening space to make a circumferential seal, the units paste together as a seal in that the compound layer of one unit pastes to the compound layer of another unit. In this embodiment, the compound becomes sticky when reacting with the water in the intervening space.

In one embodiment, the elements, the core, or the intermediate substance are made from ceramics, metal, polymer, glass fibre, cellulose, or pulpwood.

In another embodiment, the core of each separate unit is made of a magnetic material making the separate units paste together. Thus, the units will be drawn towards one another when injected and, since the casing through which the composition is injected is of metal, the units will also stick to the casing. In this way, a leak is easily sealed without filling up the whole intervening space.

In Fig. 3, the closing of the perforations 3 of the casing 2 is shown in form of projections projecting radially outwards from each perforation; however, the closing can also be made as circumferential seals. The circumferential seals are made by injecting composition 5 into several perforations 3 and into the intervening space 4 around the outside of the casing 2. Each seal is made by injecting the composition 5 through holes situated along an intersecting line where a plane extending perpendicular to the longitudinal extension of the casing 2 intersects with the circumference of the casing. Thus, the circumferential seal has an extension around the outside of the casing 2 substantially perpendicular to the extension of the casing. The perforations 3 through which the composition 5 has been injected may be filled with composition during the expansion process of the composition.

The injection of composition 5 is performed by an injection tool 13 as shown in Fig. 2. The injection tool 13 is submerged into the casing 2, and an injection tip 16 is subsequently moved outwards in a radial direction of the casing through and outside some of the perforations 3 or the leak 21.

Furthermore, the perforations 3 or the leak 21 may be too small for the injection tip 16 to inject the composition into the intervening space. In this event, the perforations 3 or the leak 21 must be widened before the injection step can take place. This is performed by a drilling tool.

The injection tool 13 has at least one chamber comprising the composition 5 to be injected. In one embodiment, the tool 13 has one chamber of composition and, in another embodiment, the tool may have several chambers each comprising enough composition to make one circumferential seal. Due to the fact that the composition 5 expands subsequent to being injected into the intervening space 4, the chamber does not need to be of the same volume as the final seal or seals.

In one embodiment, the injection tool 13 may be part of a system which also comprises a drilling tool able to expand the perforations 3 or drill holes in the casing 2 prior to the injection steps. The drilling tool may also be a separate tool which is submerged into the casing 2 prior to the injection tool 13 so that the drilling operation and the injection operation is performed in two separate runs.

In the event that the tools are not submergible all the way into the casing, a downhole tractor can be used to push the tools all the way into position in the well. A downhole tractor is any kind of driving tool capable of pushing or pulling tools in a well downhole, such as a Well Tractor®.

## Claims

1. Sealing arrangement (100) for sealing a leak (21) in a casing (2) or for sealing off a production zone (1) where the casing having a circumference and perforations (3) is situated in a borehole (22) downhole, but with a distance to an inner wall of the bore-hole, creating an intervening space (4) there between, comprising:
- a composition (5) for injection into the intervening space or into a leak in the casing, and
- a network (30) comprised in the composition after injection.

2. Sealing arrangement according to claim 1, wherein the composition comprises a compound.

3. Sealing arrangement according to claim 1 or 2, wherein the network is made of interlacing lines (29), such as a woven wire, wire netting, a web, a grid, a lattice (27), a grating, or the like networks ejected prior to or simultaneously with the composition.

4. Sealing arrangement according to claim 1 or 2, wherein the network is made of elements in the composition pasting together during hardening of the injected composition and thereby forming a network within the composition.

5. Sealing arrangement according to claim 1, wherein the composition comprises a plurality of separate units each having a core enclosed within a compound.

6. Sealing arrangement according to claim 5, wherein the network is made from the separate units pasting together during hardening of the compound and thereby forming the network.

7. Sealing arrangement according to claim 5 or 6, wherein each separate unit has an intermediate substance between the core and the surrounding compound.

8. Sealing arrangement according to any of claims 3-7, wherein the elements, the core, or the intermediate substance in the composition are made from ceramics, metal, polymer, glass fibre, cellulose, or pulpwood.

9. Sealing arrangement according to any one of claims 1-3, wherein the network is made of wire, core, coiled wire (28), polymer thread, glass fibre thread, or a like elongated component.

10. Sealing arrangement according to any of claims 2-9, wherein the compound comprises cement, polymer, synthetic rubber, natural rubber, or silicone.

11. Sealing arrangement according to claim 10, wherein the compound further comprises a curing agent, binding agent, hardener, or accelerator.

12. Sealing arrangement according to claim 7, wherein the core of each separate unit is made of a magnetic material making the separate units paste together.

13. Sealing method for sealing a leak or a production zone or for minimising an open space above a packer (19) between a production casing and an intermediate casing, comprising the steps of:
- injecting a composition (5),
- forming of a network (30) in the composition in order to fixate the injected composition in a predetermined position.

14. Sealing method according to claim 13, wherein the network is discharged prior to or simultaneously to the injecting step and takes form within the composition when the composition is injected to at least partly surround the network.

15. Sealing method according to claim 13, wherein the network is formed from elements pasting together within the composition during hardening or stiffening of the compound or the network is formed from separate units pasting together and forming a network during hardening or stiffening of the composition.
